# EUROPÄISCHE PATENTSCHRIFT

(11) **EP 2 001 716 B1**
(45) Veröffentlichungstag und Bekanntmachung des Hinweises auf die Patenterteilung: **18.05.2011**
(21) Anmeldenummer: 07727253.2
(22) Anmeldetag: 23.03.2007
(51) Int. Cl.: B60S 1/34

(54) **SCHEIBENWISCHERANTRIEBSANORDNUNG**
WINDSCREEN WIPER DRIVE ARRANGEMENT
SYSTEME D'ENTRAINEMENT D'UN ESSUIE-GLACE

(30) Priorität: 24.03.2006 DE 202006019860 U; 27.03.2006 DE 102006013961
(43) Veröffentlichungstag der Anmeldung: 17.12.2008
(73) Patentinhaber: Robert Bosch GmbH, 70442 Stuttgart (DE)
(72) Erfinder: ALBRECHT, Gérard, F-67690 Hatten (FR); BOHN, Roland, 77815 Buehl (DE); HUESGES, Mario, 77830 Buehlertal (DE); FRIDERICHS, Guenther, 77836 Schwarzach (DE); LIPPS, Verena, 76534 Baden-Baden (DE); GEUBEL, Paul, 76534 Baden-Baden (DE); REITH, Michael, 77815 Buehl (DE)
(86) Internationale Anmeldenummer: PCT/EP2007/052779
(87) Internationale Veröffentlichungsnummer: WO 2007/110382

(56) Entgegenhaltungen:
- WO-A-96/04156
- JP-A- 2000 071 941

## Beschreibung

### Stand der Technik

Die Erfindung betrifft eine Scheibenwischerantriebsanordnung gemäß dem Oberbegriff des Anspruches 1.

Aus der DE 299 01 686 U1 ist eine Scheibenwischerantriebsanordnung mit einem Antriebsmotor bekannt, der über eine Abtriebswelle mit einem in einem Getriebegehäuse angeordneten Getriebe verbunden ist. Aus dem Getriebegehäuse ist eine Antriebswelle für einen Scheibenwischer herausgeführt, die pendelnd angetrieben wird. Üblicherweise ist die Antriebswelle durch eine Öffnung in der Karosserie oder einem Fenster, in der Regel dem Heckfenster, hindurchgeführt. Zur Vermeidung eines Wassereintritts ist üblicherweise eine Schutzhülse vorgesehen, durch die die Antriebswelle in axialer Richtung hindurchgeführt ist. Diese Schutzhülse ist mittels eines inneren Dichtelements, beispielsweise eines O-Rings, gegenüber der Antriebswelle abgedichtet, so dass kein Wasser entlang der Antriebswelle nach innen laufen kann. Ferner ist die Schutzhülse mittels eines äußeren Dichtelements, insbesondere einer Durchführdichtung - einem so genannten Grommet - gegenüber dem Fahrzeugbauteil, durch das die-Antriebswelle hindurchgeführt ist, abgedichtet. Es ist bekannt, die mit einem Innenkonus versehene Schutzhülse auf einen Außenkonus des Getriebegehäuses, insbesondere eines Befestigungsdoms in axialer Richtung, aufzupressen und somit eine kraftschlüssige Verbindung zwischen Getriebegehäuse und Schutzhülse herzustellen.

Eine derartige Befestigung der Schutzhülse hat sich bewährt.

Durch äußere Einflüsse, insbesondere durch ständige Rüttelbewegung während der Fahrt oder bei Reparaturarbeiten, kann jedoch die reibschlüssige Verbindung zwischen Schutzhülse und Getriebegehäuse gelöst werden, was dazu führen kann, dass die Schutzhülse sich in axialer Richtung und/oder in Umfangsrichtung bewegen kann. Hierdurch besteht zum einen die Gefahr, dass sich die Schutzhülse beim Betrieb des Scheibenwischers pendelnd zusammen mit der Antriebswelle bewegt, was zu einem stärkeren Verschleiß des inneren Dichtelements führt. Ferner kann die Schutzhülse derart verkanten, dass eine wirksame Abdichtung gegenüber der Antriebswelle und/oder gegenüber dem Fahrzeugbauteil, durch das die Antriebswelle hindurchgeführt ist, nicht mehr gewährleistet ist. Es kommt zum Wassereintritt, insbesondere in das Getriebe und/oder Motorgehäuse und damit zu erhöhten Verschleißerscheinungen und einem elektrischen Kurzschluss.

Die WO 96/04156 A1 zeigt eine Scheibenwischerantriebsanordnung mit einer aus einem Getriebegehäuse herausgeführten Antriebswelle für einen Scheibenwischer, wobei die Antriebswelle durch eine Schutzhülse axial hindurchgeführt ist, die mit einem radial innen liegenden Dichtelement gegenüber der Antriebswelle und mit einem auf der radialen Außenseite angeordneten Dichtelement gegenüber einer Fensterscheibe abgedichtet ist.

Aus der JP 2000-071941 A ist es bekannt, eine Schutzhülse, die auf eine in einem gehäuseseitigen Lagerdom drehbar aufgenommene Antriebswelle aufgeschoben ist, auf die freie Stirnseite des Lagerdoms aufzuschieben. Der Lagerdom weist benachbart zu seiner Stirnseite eine Mantelfläche mit unregelmäßige Oberfläche auf, welche im montierten Zustand von der Schutzhülse übergriffen wird. Auf diese Weise ist eine reibschlüssige Sicherung der Schutzhülse auf dem Lagerdom möglich.

Die Schutzhülse ist über einen Dichtring gegenüber der Antriebswelle abgedichtet, wodurch Reibmomente zwischen der Antriebswelle und der Schutzhülse entstehen, wobei der Reibschluss zwischen der äußeren Mantelfläche des Lagerdoms und der Innenseite der Schutzhülse so groß sein muss, dass trotz des Reibmomentes zwischen Antriebswelle und Schutzhülse ein Verdrehen der Schutzhülse sicher verhindert wird.

### Offenbarung der Erfindung

### Technische Aufgabe

Der Erfindung liegt die Aufgabe zugrunde, eine verbesserte Wischerantriebsanordnung vorzusehen, bei der die Gefahr eines Versagens der Abdichtung minimiert ist.

### Technische Lösung

Diese Aufgabe wird mit den Merkmalen des Anspruchs 1 bzw. des Anspruchs 5 gelöst.

Vorteilhafte Weiterbildungen der Erfindung sind in den Unteransprüchen angegeben.

Der Erfindung liegt der Gedanke zugrunde, zusätzlich oder alternativ zu einer Verpressung der Schutzhülse mit einem Getriebegehäuseabschnitt, also zu einer ausschließlich kraft- bzw. reibschlüssigen Verbindung, einen Formschluss zwischen Schutzhülse und Getriebegehäuse und/oder ein separates Fixierelement zur Fixierung der Schutzhülse an dem Getriebegehäuse vorzusehen, um eine Relativbewegung der Schutzhülse zum Getriebegehäuse axial in Richtung Fahrzeugbauteil und/oder in Umfangsrichtung zu vermeiden. Durch die zur reibschlüssigen Verbindung zusätzlichen oder alternativen Sicherungsmittel kann ein erhöhter Dichtungsverschleiß, insbesondere zwischen Schutzhülse und Antriebswelle, mit Vorteil vermieden werden, da die Schutzhülse zu den Dichtelementen und der Antriebswelle immer eine exakt definierte Position einhält. Ein unbeabsichtigtes Lösen der Schutzhülse aus dieser definierten Relativposition wird mit Vorteil vermieden. Aufgrund des Vorsehens einer formschlüssigen Verbindung und/oder eines separaten Fixierelements können wesentlich größere Momente von der Schutzhülse aufgenommen bzw. abgefangen werden.

Es gibt grundsätzlich verschiedene Möglichkeiten zur Gewährleistung einer zusätzlichen oder alternativen Sicherung bzw. Fixierung der Schutzhülse an dem Getriebegehäuse.

Gemäß einer vorteilhaften Ausgestaltung der Erfindung greifen die Schutzhülse und ein Abschnitt des Getriebegehäuses, bevorzugt ein Befestigungsdom des Getriebegehäuses, verzahnungsartig ineinander. Durch diesen Formschluss wird ein Verdrehen der Schutzhülse relativ zu dem Getriebegehäuse vermieden. Zusätzlich zu dieser Sicherung gegen eine Bewegung in Umfangsrichtung kann die Schutzhülse gegen eine Axialbewegung gesichert werden. Zu diesem Zweck kann die axiale Fixierung beispielsweise durch eine weitere formschlüssige Verbindung der Schutzhülse mit dem Getriebegehäuse hergestellt werden. Es ist auch eine Abstützung der Schutzhülse in axialer Richtung an einem sich an der Antriebswelle abstützenden, Bauteil, insbesondere einer Speednut, oder einem einstückig mit der Antriebswelle ausgebildeten Radialabschnitt denkbar.

Gemäß erster Ausführung der Erfindung ist vorgesehen, die Schutzhülse mit dem Getriebegehäuse zu verrasten. Dabei kann die mindestens eine Verrastung derart ausgebildet sein, dass sie die Schutzhülse ausschließlich gegen eine axiale Relativbewegung oder ausschließlich gegen eine Verdrehbewegung relativ zu dem Getriebegehäuse sichert. Bevorzugt wird jedoch die Schutzhülse mit dem Getriebegehäuse derart verrastet, dass beide Freiheitsgrade eliminiert werden.

Gemäß dieser ersten Ausführungsform ist vorgesehen, dass die Rastmittel zur Fixierung der Schutzhülse an dem Getriebegehäuse an einem in Richtung Getriebegehäuse weisenden Rastarm der Schutzhülse angeordnet sind. Beispielsweise weist der Rastarm, vorzugsweise an seinem freien Ende, eine Ausnehmung auf, die in eine Rastnase des Getriebegehäuses eingreift. Ebenso ist es denkbar, Rastnase und Ausnehmung vertauscht anzuordnen.

Gemäß zweiter Ausführung der Erfindung ist vorgesehen wenn die Schutzhülse mit dem Getriebegehäuse verstemmt ist. Hierzu weist die Schutzhülse mindestens eine Öffnung auf, durch die ein Fortsatz des in der Regel aus Aluminiumguss bestehenden Getriebegehäuses hindurchragt. Nach dem Aufstecken der

Schutzhülse wird der Fortsatz, insbesondere durch Schlageinwirkung, an seinem freien Ende derart verbreitert, dass die Schutzhülse nicht mehr von dem Fortsatz abzuziehen ist. Durch das Verstemmen wird die Schutzhülse sowohl in axialer als auch in Umfangsrichtung gesichert.

Zusätzlich oder alternativ ist es von Vorteil, die Schutzhülse mit dem Getriebegehäuse mittels separater Niete zu vernieten.

In Weiterbildung der Erfindung ist mit Vorteil vorgesehen, die Schutzhülse an dem Getriebegehäuse mittels einer Doppel-Speednut festzulegen. Eine Doppel-Speednut weist sowohl an ihrem Innenumfang als auch an ihrem Außenumfang federelastische Elemente auf, die sich einerseits mit dem Getriebegehäuse, insbesondere dem Befestigungsdom, und andererseits mit der Schutzhülse verspannen bzw. verkrallen.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
- Fig. 1: eine geschnittene Darstellung einer Scheibenwischeranordnung mit einer Schutzhülse, die mittels einer Verzahnung formschlüssig mit einem Getriebegehäuse verbunden ist,
- Fig. 2: eine Schnittdarstellung der Schutzhülse entlang der Schnittlinie A-A gemäß Fig. 1,
- Fig. 3: ein vergrößertes Detail aus Fig. 2,
- Fig. 4: eine geschnittene Darstellung der Schutzhülse entlang der Schnittlinie B-B gemäß Fig. 2,
- Fig. 5: eine Seitenansicht des Befestigungsdoms des Getriebegehäuses,
- Fig. 6: eine geschnittene Darstellung des Befestigungsdoms mit innen liegender Antriebswelle entlang der Schnittlinie C-C gemäß Fig. 5,
- Fig. 7: ein vergrößertes Detail aus Fig. 6,
- Fig. 8: eine geschnittene Darstellung einer Scheibenwischerantriebsanordnung, bei der die Schutzhülse mit dem Getriebegehäuse verstemmt ist,
- Fig. 9: eine Schnittdarstellung der Schutzhülse entlang der Schnittlinie D-D gemäß Fig. 8,
- Fig. 10: eine Scheibenwischerantriebsanordnung, bei der die Schutzhülse mittels einer Doppel-Speednut an dem Befestigungsdom des Getriebegehäuses fixiert ist,
- Fig. 11: eine Darstellung der an der Schutzhülse fixierten Speednut,
- Fig. 12: ein vergrößertes Detail aus Fig. 10,
- Fig. 13: eine Scheibenwischeranordnung, bei der die Schutzhülse formschlüssig mit dem Getriebegehäuse verbunden und zusätzlich in axialer Richtung mittels einer Speednut gesichert ist,
- Fig. 14: eine Darstellung der Speednut,
- Fig. 15: eine Scheibenwischerantriebsanordnung, bei der die Schutzhülse 15 mit dem Getriebegehäuse 3 verrastet ist, und
- Fig. 16: eine in Bezug auf Fig. 15 um 90° gedrehte Ansicht eines Rastarms.

### Ausführungsformen der Erfindung

In den Figuren sind gleiche Bauteile und Bauteile mit gleicher Funktion mit den Bezugszeichen gekennzeichnet.

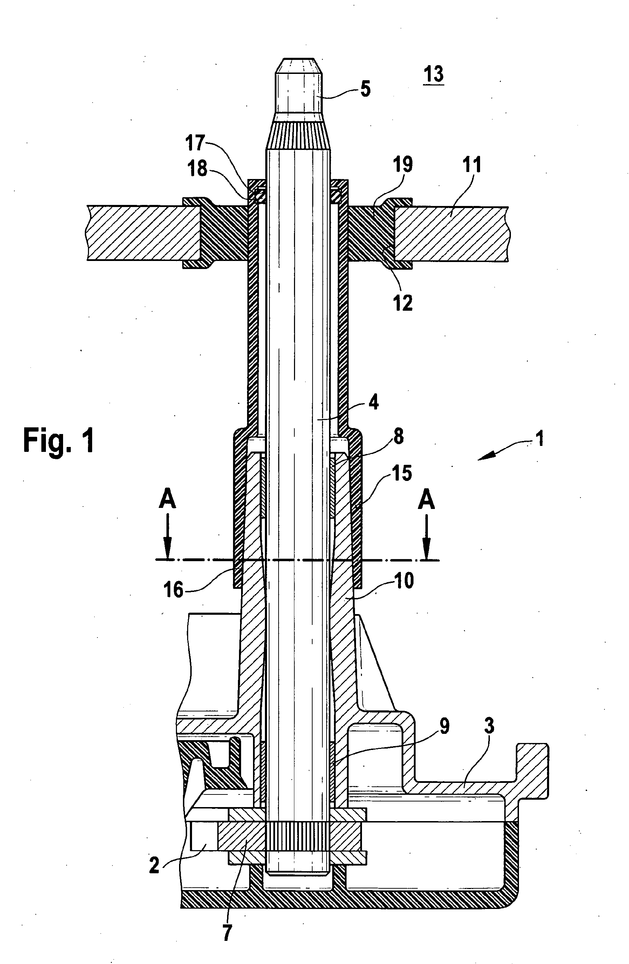

In Fig. 1 ist eine Scheibenwischerantriebsanordnung 1 für ein Kraftfahrzeug dargestellt. Ein nicht dargestellter elektrischer Antriebsmotor ist über eine ebenfalls nicht dargestellte Abtriebswelle mit einem Getriebe 2 verbunden. Das teilweise gezeigte Getriebe 2 ist innerhalb eines ausschnittsweise dargestellten Getriebegehäuses 3 aus Aluminium angeordnet. Mittels des Motors und des Getriebes 2 wird eine Antriebswelle 4 pendelnd angetrieben. An dem freien Ende 5 der aus dem Getriebegehäuse 3 herausgeführten Antriebswelle 4 kann ein Wischerarm fixiert werden. Auf der Antriebswelle 4 sitzt ein Zahnrad 7, welches mit einem verzahnten Element des Getriebes 2 kämmt. Die Antriebswelle 4 ist mittels zweier beabstandeter Lager 8, 9 in axialer sowie in radialer Richtung innerhalb des Getriebegehäues 3 gelagert. Das vordere Lager 8 sitzt in einem Befestigungsdom 10 des Getriebegehäuses 3, welcher die Antriebswelle 4 über einen Teil ihrer Längserstreckung in Umfangsrichtung umschließt.

Die Antriebswelle 4 ist aus dem Getriebegehäuse 3 bzw. aus dem Befestigungsdom 10 heraus und mit Abstand hierzu durch ein Fahrzeugbauteil 11, insbesondere ein Karosserieblech oder eine Fensterscheibe, hindurchgeführt. Zu diesem Zweck ist in dem Fahrzeugbauteil 11 eine Öffnung 12 vorgesehen.

Damit von der Außenseite 13 des Fahrzeugs her kein Wasser in Richtung Getriebe 2 eindringen kann, ist eine Schutzhülse 15 mit kreisförmigen inneren und äußeren Querschnittsflächen vorgesehen. Die Schutzhülse ist mit ihrem sich konisch erweiternden Endbereich 16 auf den sich in Richtung Fahrzeugbauteil 11 konisch verjüngenden Befestigungsdom 10 in axialer Richtung aufgepresst. In einer Nut 17 am Innenumfang der Schutzhülse 15 ist ein als O-Ring ausgebildetes inneres Dichtelement 18 angeordnet. Dieses liegt voll umfänglich an der Antriebswelle 4 an und verhindert ein Eindringen von Wasser von der Außenseite 13 her in das Innere der Schutzhülse 15. Bei einer Pendelbewegung der Antriebswelle 4 gleitet diese am Innenumfang des inneren Dichtelements 18 entlang. Um einen Wassereintritt zwischen dem Außenumfang der Schutzhülse 15 und dem Öffnungsrand der Öffnung 12 in Richtung Getriebegehäuse 3 zu verhindern, ist innerhalb der Öffnung 12 ein am Umfangsrand der Öffnung 12 gehaltenes äußeres Dichtelement 19, insbesondere eine Durchführungsdichtung (Grommet), vorgesehen. Dieses liegt dichtend am Außenumfang der Schutzhülse 15 an.

Sollte sich die reibschlüssige Verbindung zwischen Befestigungsdom 10 und Innenumfang der Schutzhülse 15 lösen, so wird ein Verdrehen der Schutzhülse 15 in Umfangsrichtung durch die formschlüssige Verbindung zwischen Schutzhülse 15 und Befestigungsdom 10 vermieden.

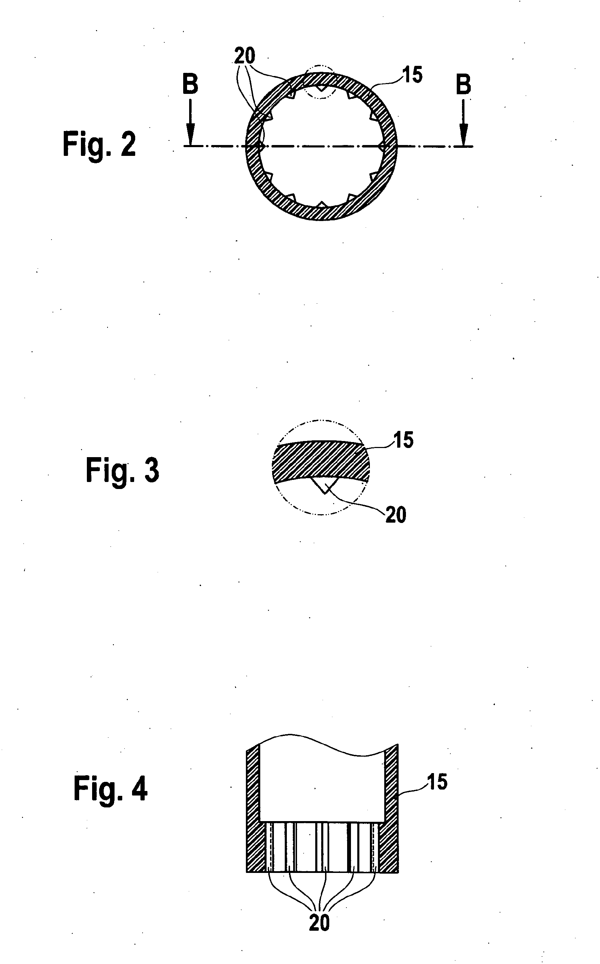

Die formschlüssige Verbindung zwischen Schutzhülse 15 und Befestigungsdom 10 ist in den Fig. 2 bis Fig. 7 detailliert dargestellt. Wie sich aus Fig. 2 ergibt, sind am Innenumfang sich in axialer Richtung erstreckende und in Umfangsrichtung beabstandete radial nach innen weisende Zähne 20 mit dreieckigem Querschnitt (siehe Fig. 3) vorgesehen. Diese greifen in nicht dargestellte Vertiefungen am Außenumfang des Befestigungsdoms 10 ein.

Zusätzlich oder alternativ können am Außenumfang des Befestigungsdoms 10 in Umfangsrichtung beabstandete, radial nach außen weisende und sich in axialer Richtung erstreckende Zähne 21 vorgesehen werden, die in nicht dargestellte formkomplementäre Vertiefungen am Innenumfang der Schutzhülse 15 eingreifen. Durch die Verzahnung der Schutzhülse 15 mit dem Befestigungsdoms 10 wird eine relative Verdrehbewegung zwischen Schutzhülse 15 und Getriebegehäuse 10 mit Vorteil vermieden. Die Verpressung hat lediglich noch die Funktion einer Sicherung der Schutzhülse 15 gegen ein axiales Verschieben. Löst sich die Verpressung kann sich die Schutzhülse zwar nicht verdrehen, jedoch axial in Richtung Fahrzeugbauteil 11 verschieben. Bei Bedarf kann auf die Verpressung vollständig verzichtet werden, insbesondere dann, wenn eine axiale Verschiebebewegung durch einen Formschluss oder ein separates Fixierelement verhindert wird.

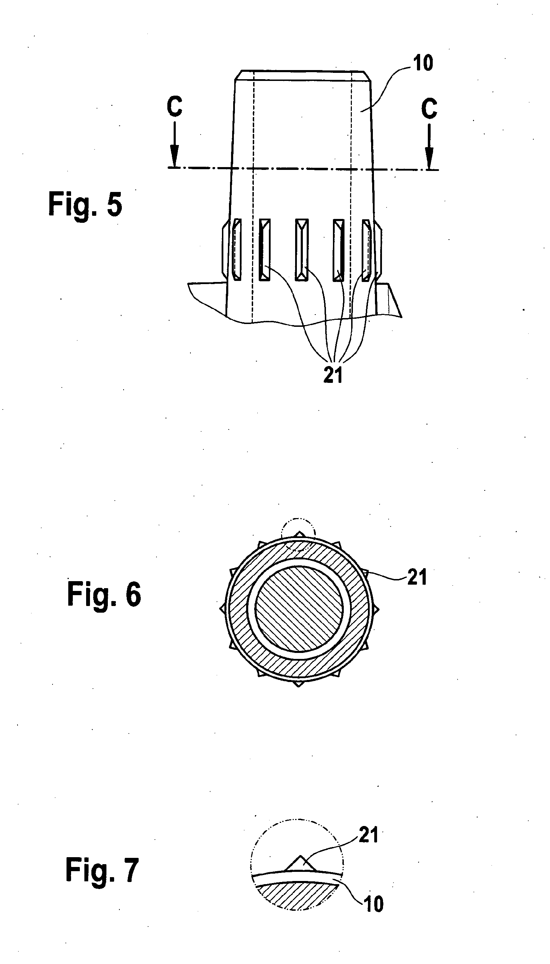

Es ist auch denkbar, dass die beiden in den Fig. 2 und 6 dargestellten Verzahnungen 20, 21 ineinandergreifen. In diesem Fall stützen sich die Zähne 20, 21 in Umfangsrichtung gegeneinander ab. Da bei einer derartigen nicht formkomplementär ausgebildeten formschlüssigen Verbindung in axialer Richtung Freiräume entstehen, kann eventuell doch eingetretenes Wasser nach unten durch diese Freiräume in Richtung Außenseite des Getriebegehäuses 3 ablaufen.

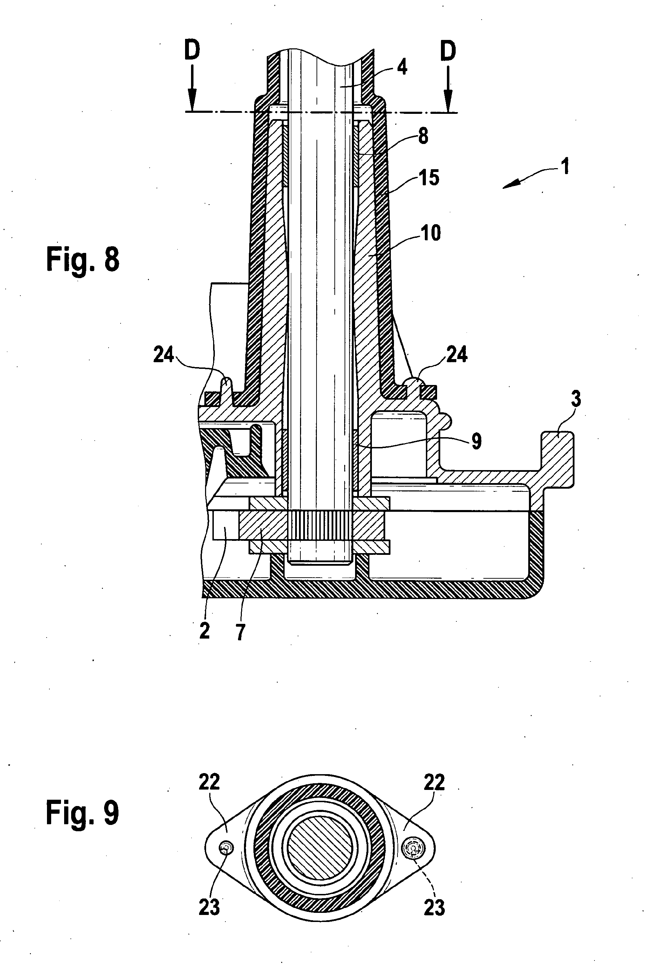

In Fig. 8 und 9 ist eine alternative Ausführungsform dargestellt. Die nur ausschnittsweise dargestellte Schutzhülse 15 ist auf den Befestigungsdom 10 des Getriebegehäuses 3 aufgeschoben, jedoch nicht verpresst. Die Sicherung gegen eine Axialbewegung sowie gegen eine Verdrehbewegung der Schutzhülse 15 ist durch ein Verstemmen der Bauteile (15, 10) realisiert. Hierzu sind an der die Antriebswelle 4 umgreifenden Schutzhülse 15 zwei gegenüberliegende in axialer Richtung leicht versetzt zueinander angeordnete und sich in Querrichtung zur Axialerstreckung der Schutzhülse 15 erstreckende Anlageabschnitte 22 bzw. Anlagelaschen vorgesehen. Jeder Anlageabschnitt 22 weist eine Öffnung 23 auf, durch die jeweils ein einstückig mit dem Getriebegehäuse 3 aus Aluminiumguss ausgebildeter Fortsatz 24 geführt ist. In der jeweils rechten Zeichnungshälfte der Fig. 8 und 9 ist der bereits durch Pressen verstemmte Fortsatz 24 gezeigt. Das freie Ende des Fortsatzes 24 ist derart verbreitert, dass es nicht mehr durch die Öffnung 23 hindurchgeführt werden kann. In der linken Zeichnungshälfte wurde der Verstemmschritt noch nicht durchgeführt. Zu erkennen ist der noch unveränderte, durch die Öffnung 23 hindurchgeführte Fortsatz 24. Die Fortsätze 24 verhindern ein Verdrehen der Schutzhülse 15. Die Sicherung in axialer Richtung wird durch die verbreiterten Köpfe der Fortsätze 24 gewährleistet.

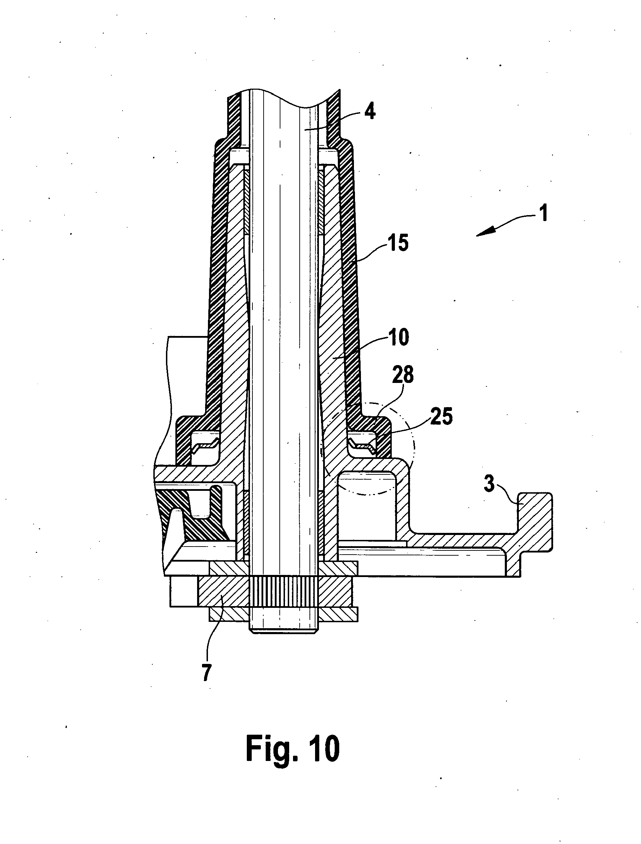

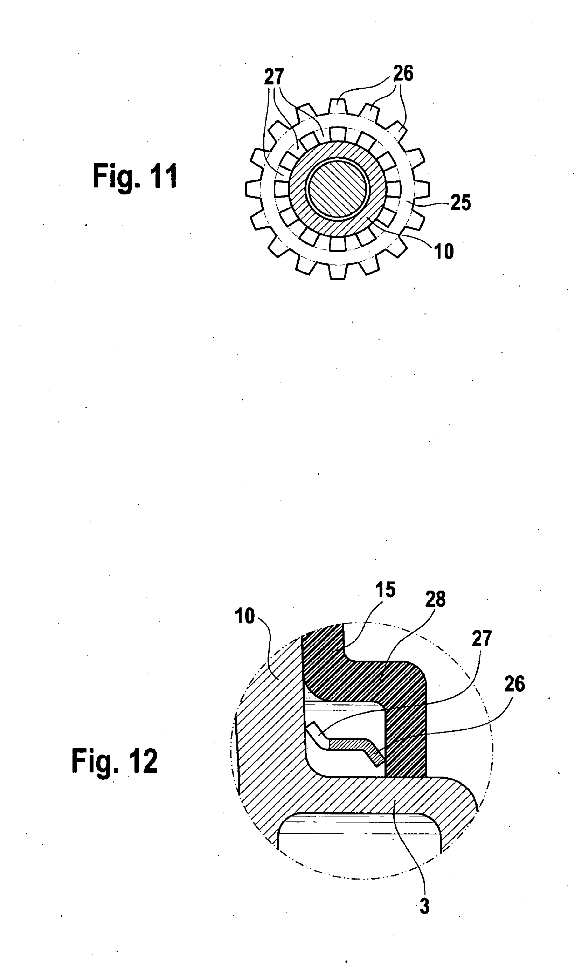

Bei dem in Fig. 10 dargestellten Ausführungsbeispiel ist die Schutzhülse 15 ebenfalls über den Befestigungsdom 10 des Getriebegehäuses 3 gestülpt. Gegebenenfalls kann die Schutzhülse aus Kunststoff mit dem Befestigungsdom 10 verpresst sein. Zur Sicherung gegen eine axiale Bewegung der Schutzhülse sowie ein Verdrehen der Schutzhülse 15 ist die Schutzhülse 15 mittels der in Fig. 11 im Detail dargestellten, als Doppel-Speednut ausgebildeten Fixierelements 25 mit dem Getriebegehäuse 3 verbunden. Die Doppel-Speednut 25 weist am Außenumfang in Umfangsrichtung beabstandete federelastische, nach radial außen weisende Laschen 26 und an ihren Innenumfang nach radial innen weisende federnde Laschen 27 auf. Mittels der äußeren Laschen 26 verkrallt sich die Doppel-Speednut 25 am Innenumfang eines unteren Absatzes der Schutzhülse 15. Mit ihren inneren Laschen 27 verkrallt sich die Doppel-Speednut am Außenumfang des Befestigungsdoms 10. Im Detail ist dies in Fig. 12 zu erkennen. Die inneren Laschen 27 sind axial in Richtung des freien Endes des Befestigungsdoms 10 aufgebogen, wohingegen die äußeren Laschen 26 in die entgegengesetzte Richtung abgewinkelt sind. Beispielsweise wird zunächst die Doppel-Speednüt 25 innerhalb des Absatzes 28 der Schutzhülse 15 verspannt, woraufhin die Einheit aus Schutzhülse 15 und Doppel-Speednut 25 vom freien Ende des Befestigungsdoms 10 her auf diesen aufgeschoben wird.

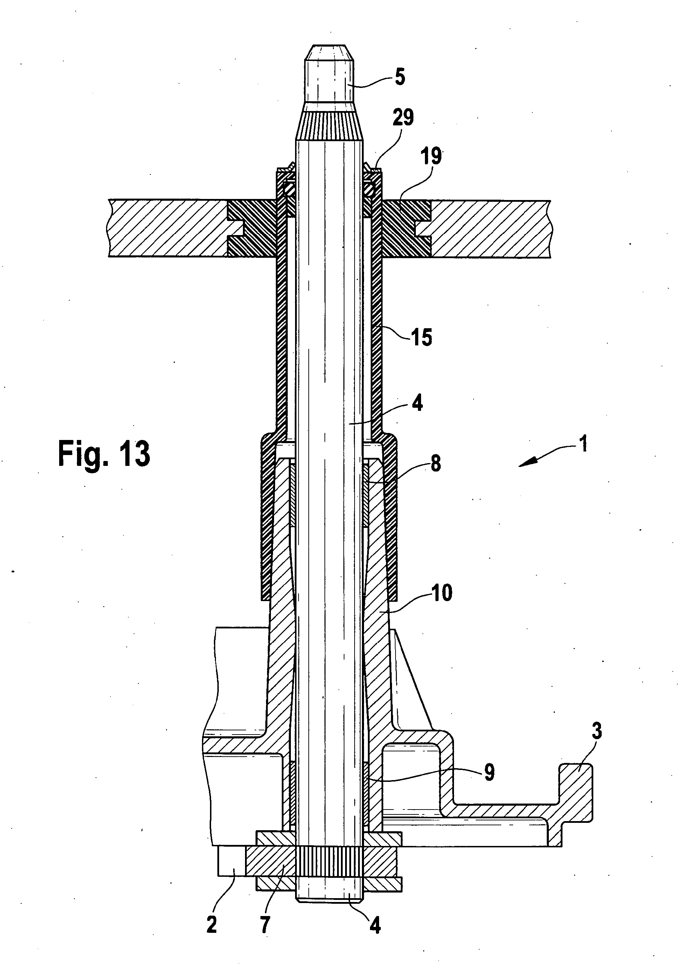

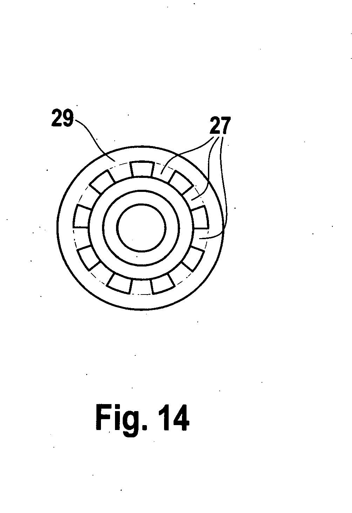

Bei dem Ausführungsbeispiel gemäß Fig. 13 ist zusätzlich zu der Verzahnung zwischen Schutzhülse 15 und Befestigungsdom 10 ein zusätzliches Sicherungselement 29 vorgesehen. Dieses ist als Speednut (siehe Fig. 14) ausgebildet. Die Speednut 29 weist am Innenumfang federnde Laschen 27 bzw. Krallen auf, mit denen sie sich an der glatten Antriebswelle 4 verkrallt. Nach der Montage der Schutzhülse 15 auf dem Befestigungsdom 10 wird das Sicherungselement 29 vom freien Ende 5 der glatten Antriebswelle 4 her auf diese aufgeschoben, bis zur Anlage an der Stirnseite der Schutzhülse 15. Dabei stellen sich die Laschen 27 auf und verhindern somit ein axiales Verschieben des Fixiermittels 29 entgegen der Aufschieberichtung und sichern somit die Schutzhülse 15 in axialer Richtung auf dem Befestigungsdom 10.

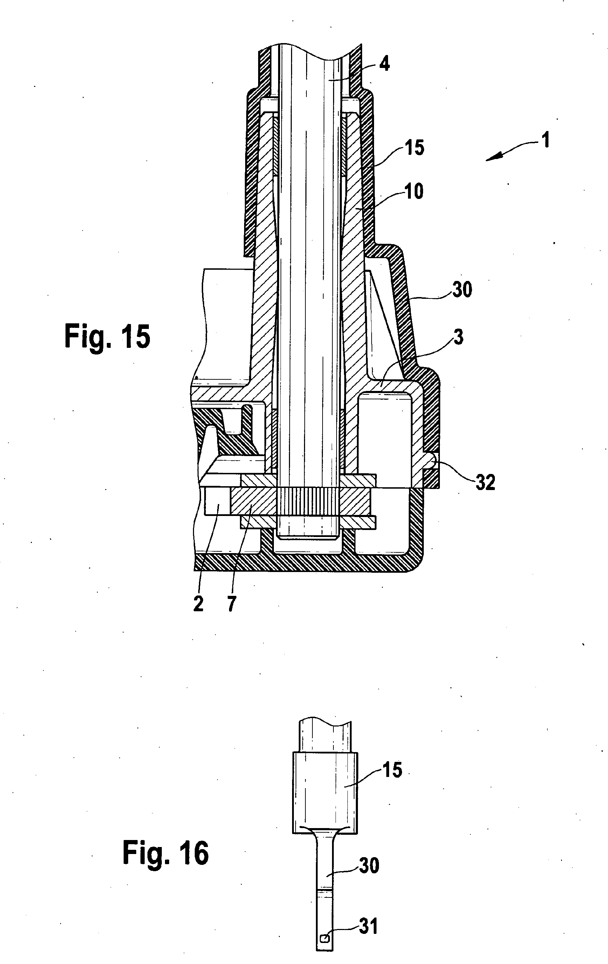

In Fig. 15 ist ein weiteres Ausführungsbeispiel einer Scheibenwischerantriebsanordnung 1 gezeigt. Die Schutzhülse 15 ist mit dem Befestigungsdom 10 verpresst. Zusätzlich ist ein sich in Richtung Getriebegehäuse 3 erstreckender, quer zur Axialrichtung federnder Rastarm 30 vorgesehen. Dieser weist, wie in Fig. 16 im Detail gezeigt, an seinem freien Ende eine Ausnehmung 31 auf, mit der er auf eine Rastnase 32 des Getriebegehäuses 3 aufgeschoben ist. Durch diese Verrastung wird jegliche Bewegung der Schutzhülse relativ zu dem. Getriebegehäuse 3 unterbunden.

## Patentansprüche

1. Scheibenwischerantriebsanordnung mit einer aus einem Getriebegehäuse (3) herausgeführten Antriebswelle (4) für einen Scheibenwischer, wobei die Antriebswelle (4) durch eine Schutzhülse (15) axial hindurchgeführt ist, die mit mindestens einem inneren Dichtelement (18) gegenüber der Antriebswelle (4) und mit mindestens einem äußeren Dichtelement (19) gegenüber einem Fahrzeugbauteil (11) abgedichtet ist,
**dadurch gekennzeichnet,**
**dass** die Schutzhülse (15) zur Sicherung gegen eine Axialbewegung in Richtung Fahrzeugbauteil (11) und/oder eine Verdrehbewegung relativ zu dem Getriebegehäuse (3) durch Formschluss und/oder mit mindestens einem separaten Fixierelement (25) an dem Getriebegehäuse festgelegt ist, dass die Schutzhülse (15) mit dem Getriebegehäuse (3) verrastet ist und dass mindestens ein einstückig mit der Schutzhülse (15) ausgebildeter, in Richtung Getriebegehäuse (3) weisender, federnder Rastarm (30) vorgesehen ist, der mit einem Rastmittel (31) formschlüssig in ein Gegenrastmittel (32) des Getriebegehäuses (3) eingreift.

2. Scheibenwischerantriebsanordnung nach Anspruch 1,
**dadurch gekennzeichnet,**
**dass** am Innenumfang der Schutzhülse (15) eine Innenverzahnung mit in Umfangsrichtung beabstandeten Zähnen (20) vorgesehen ist, die in eine, insbesondere formkomplementäre, Außenverzahnung (21) des Getriebegehäuses (3) eingreift.

3. Scheibenwischerantriebsanordnung nach Anspruch 2,
**dadurch gekennzeichnet,**
**dass** mindestens ein sich an der Antriebswelle (4) abstützendes Sicherungselement (29) zur Sicherung der Schutzhülse (15) gegen axiales Verschieben vorgesehen ist.

4. Scheibenwischerantriebsanordnung nach Anspruch 3,
**dadurch gekennzeichnet,**
**dass** das Sicherungselement (29) als auf die Antriebswelle (4) aufschiebbare Speednut ausgebildet ist.

5. Scheibenwischerantriebsanordnung mit einer aus einem Getriebegehäuse (3) herausgeführten Antriebswelle (4) für einen Scheibenwischer, wobei die Antriebswelle (4) durch eine Schutzhülse (15) axial hindurchgeführt ist, die mit mindestens einem inneren Dichtelement (18) gegenüber der Antriebswelle (4) und mit mindestens einem äußeren Dichtelement (19) gegenüber einem Fahrzeugbauteil (11) abgedichtet ist,
**dadurch gekennzeichnet,**
**dass** die Schutzhülse (15) zur Sicherung gegen eine Axialbewegung in Richtung Fahrzeugbauteil (11) und/oder eine Verdrehbewegung relativ zu dem Getriebegehäuse (3) durch Formschluss und/oder mit mindestens einem separaten Fixierelement (25) an dem Getriebegehäuse festgelegt ist, dass die Schutzhülse (15) mit dem Getriebegehäuse (3) verstemmt ist und dass die Schutzhülse (15) mindestens einen quer zu ihrer Axialerstreckung verlaufenden Anlageabschnitt (22) mit mindestens einer Öffnung (23) zur Durchführung und anschließenden Verstemmung eines Fortsatzes (24) des Getriebegehäuses (3) aufweist.

6. Scheibenwischerantriebsanordnung nach einem der Ansprüche 1 bis 5,
**dadurch gekennzeichnet,**
**dass** die Schutzhülse (15), insbesondere mindestens ein quer zu ihrer Axialerstreckung verlaufender Anlageabschnitt (22), mit dem Getriebegehäuse vernietet ist.

7. Scheibenwischerantriebsanordnung nach einem der Ansprüche 1 bis 6,
**dadurch gekennzeichnet,**
**dass** das separate Fixierelement (25) als Doppel-Speednut ausgebildet ist, die einerseits mit dem Getriebegehäuse (3) und andererseits mit der Schutzhülse (15) verspannt ist.

## Claims

1. Windscreen wiper drive arrangement with a drive shaft (4), which is led out of a gear housing (3), for a windscreen wiper, wherein the drive shaft (4) is guided axially through a protective sleeve (15) which is sealed off from the drive shaft (4) by at least one inner sealing element (18) and from a vehicle component (11) by at least one outer sealing element (19), **characterized in that** the protective sleeve (15) is fixed to the gear housing by an interlocking connection and/or by at least one separate fixing element (25) so as to be secured against axial movement in the direction of the vehicle component (11) and/or a rotational movement relative to the gear housing (3), **in that** the protective sleeve (15) is latched to the gear housing (3), and **in that** at least one resilient latching arm (30) is provided, the latching arm being formed integrally with the protective sleeve (15), pointing in the direction of the gear housing (3) and engaging in an interlocking manner by a latching means (31) in a mating latching means (32) of the gear housing (3).

2. Windscreen wiper drive arrangement according to Claim 1, **characterized in that** an internal toothing having teeth (20) spaced apart in the circumferential direction is provided on the internal circumference of the protective sleeve (15) and engages into an, in particular shape-complementary, external toothing (21) of the gear housing (3).

3. Windscreen wiper drive arrangement according to Claim 2, **characterized in that** at least one securing element (29) which is supported on the drive shaft (4) is provided to secure the protective sleeve (15) against axial displacement.

4. Windscreen wiper drive arrangement according to Claim 3, **characterized in that** the securing element (29) is designed in the form of a speed nut which can be pushed onto the drive shaft (4).

5. Windscreen wiper drive arrangement with a drive shaft (4), which is led out of a gear housing (3), for a windscreen wiper, wherein the drive shaft (4) is guided axially through a protective sleeve (15) which is sealed off from the drive shaft (4) by at least one inner sealing element (18) and from a vehicle component (11) by at least one outer sealing element (19), **characterized in that** the protective sleeve (15) is fixed to the gear housing by an interlocking connection and/or by at least one separate fixing element (25) so as to be secured against axial movement in the direction of the vehicle component (11) and/or a rotational movement relative to the gear housing (3), **in that** the protective sleeve (15) is caulked to the gear housing (3), and **in that** the protective sleeve (15) has at least one bearing section (22) which runs transversely with respect to the axial extent of said protective sleeve and has at least one opening (23) for the guiding through and subsequent caulking of an extension (24) of the gear housing (3).

6. Windscreen wiper drive arrangement according to one of Claims 1 to 5, **characterized in that** the protective sleeve (15), in particular at least one bearing section (22) running transversely with respect to the axial extent of said protective sleeve, is riveted to the gear housing.

7. Windscreen wiper drive arrangement according to one of Claims 1 to 6, **characterized in that** the separate fixing element (25) is designed in the form of a double speed nut which is secured on one side by the gear housing (3) and on the other side by the protective sleeve (15).

## Revendications

1. Système d'entraînement d'un essuie-glace, comprenant un arbre d'entraînement (4) guidé hors d'un boîtier de transmission (3) pour un essuie-glace, l'arbre d'entraînement (4) étant guidé axialement à travers un manchon protecteur (15) qui est étanché avec au moins un élément d'étanchéité interne (18) par rapport à l'arbre d'entraînement (4) et avec au moins un élément d'étanchéité externe (19) par rapport à un composant du véhicule (11),
**caractérisé en ce que**
le manchon protecteur (15), pour la protection contre un déplacement axial dans la direction du composant du véhicule (11) et/ou un mouvement de rotation par rapport au boîtier de transmission (3), est fixé par engagement par correspondance géométrique et/ou avec au moins un élément de fixation séparé (25) sur le boîtier de transmission,
**en ce que** le manchon protecteur (15) est encliqueté avec le boîtier de transmission (3) et **en ce qu'**au moins un bras d'encliquetage (30) élastique, tourné dans la direction du boîtier de transmission (3), réalisé d'une seule pièce avec le manchon protecteur (15), est prévu, lequel vient en prise par engagement par correspondance géométrique avec un moyen d'encliquetage (31) dans un moyen d'encliquetage conjugué (32) du boîtier de transmission (3).

2. Système d'entraînement d'un essuie-glace selon la revendication 1,
**caractérisé en ce**
**qu'**une denture interne est prévue à la périphérie interne du manchon protecteur (15), avec des dents (20) espacées dans la direction périphérique, et vient en prise dans une denture externe (21), notamment de forme complémentaire, du boîtier de transmission (3).

3. Système d'entraînement d'un essuie-glace selon la revendication 2,
**caractérisé en ce**
**qu'**au moins un élément de protection (29) s'appuyant sur l'arbre d'entraînement (4) est prévu pour empêcher le déplacement axial du manchon protecteur (15).

4. Système d'entraînement d'un essuie-glace selon la revendication 3,
**caractérisé en ce que**
l'élément de protection (29) est réalisé sous forme d'écrou à ressort pouvant être poussé sur l'arbre d'entraînement (4).

5. Système d'entraînement d'un essuie-glace comprenant un arbre d'entraînement (4) guidé hors d'un boîtier de transmission (3) pour un essuie-glace, l'arbre d'entraînement (4) étant guidé axialement à travers un manchon protecteur (15) qui est étanché avec au moins un élément d'étanchéité interne (18) par rapport à l'arbre d'entraînement (4) et avec au moins un élément d'étanchéité externe (19) par rapport à un composant du véhicule (11),
**caractérisé en ce que**
le manchon protecteur (15), pour la protection contre un déplacement axial dans la direction du composant du véhicule (11) et/ou un mouvement de rotation par rapport au boîtier de transmission (3), est fixé par engagement par correspondance géométrique et/ou avec au moins un élément de fixation séparé (25) sur le boîtier de transmission,
**en ce que** le manchon protecteur (15) est fixé par matage au boîtier de transmission (3) et **en ce que** le manchon protecteur (15) présente au moins une portion d'appui (22) s'étendant transversalement à son étendue axiale, avec au moins une ouverture (23) pour le guidage et le matage subséquent d'une saillie (24) du boîtier de transmission (3).

6. Système d'entraînement d'un essuie-glace selon l'une quelconque des revendications 1 à 5, **caractérisé en ce que**
le manchon protecteur (15), en particulier au moins une portion d'appui (22) s'étendant transversalement à son étendue axiale, est riveté au boîtier de transmission.

7. Système d'entraînement d'un essuie-glace selon l'une quelconque des revendications 1 à 6, **caractérisé en ce que**
l'élément de fixation séparé (25) est réalisé sous forme d'écrou à ressort double, qui est serré d'une part avec le boîtier de transmission (3) et d'autre part avec le manchon protecteur (15).
